# EUROPÄISCHE PATENTANMELDUNG

(11) **EP 0 698 756 A1**
(43) Veröffentlichungstag der Anmeldung: **28.02.1996**
(21) Anmeldenummer: 95100656.8
(22) Anmeldetag: 19.01.1995
(51) Int. Cl.: F16J 15/06

(54) **Wärmebeständige Dichtung für Öfen oder dergl.**

(30) Priorität: 23.08.1994 DE 9413562 U
(71) Anmelder: CULIMETA TEXTILGLAS-TECHNOLOGIE GmbH + CO. KG, D-49593 Bersenbrück (DE)
(72) Erfinder: Cuylits, Alfons c/o Culimeta, D 49593 Bersenbrück (DE)
(74) Vertreter: Türk, Gille, Hrabal, Leifert

(57) **Zusammenfassung**

Es ist eine wärmebeständige Dichtung für Öfen offenbart, die einen flexiblen Strang (2) aus Dichtungsmaterial und Haltern (3;4) zum Befestigen des Dichtungsmaterials an einer Unterlage, beispielsweise am Gehäuse eines Ofens, aufweist. Der Stang (2) besteht aus schlecht leitendem Dichtungsmaterial wie Glasseide. Die Halter (3;4) sind so ausgebildet, daß sie in den Strang aus Dichtungsmaterial eingreifen und diesen durchsetzen können.

## Beschreibung

Die Erfindung betrifft eine wärmebeständige Dichtung für Öfen od. dgl., insbesondere auch für selbstreinigende Öfen, wobei die Dichtung an mit Klappen oder Türen zu verschließenden Öffnungen eines Ofengehäuses anzubringen ist und einen flexiblen Strang aus Dichtungsmaterial sowie Halter zum Befestigen des Dichtungsmaterial-Stranges an einer Unterlage, beispielsweise dem Ofengehäuse, aufweist.

An Öfen und insbesondere unter erhöhten Temperaturen arbeitenden Öfen anzubringende Dichtungen müssen wärmebeständig sein, so daß sie nicht aus üblichem elastischen Dichtungsmaterial wie Gummi bestehen können, wenn sie eine lange Lebensdauer haben sollen. Auch lassen sich derartige Dichtungen nicht um die abzudichtende Öffnung auf dem Gehäuse des Ofens festkleben, weil sowohl das Material der Dichtungen als auch das Material des Ofengehäuses unterschiedliche Wärmedehnungen und Wärmeschrumpfungen zeigen, so daß Klebverbindungen oder auch Schweißverbindungen schon nach kurzen Betriebszeiten brechen oder sonstwie beschädigt werden.

Andererseits stören Klammern, welche am strangförmigen Dichtungsmaterial angebracht sind, die Oberfläche des Dichtungsmaterials und damit die Dichtwirkung der Dichtung insgesamt.

Der Erfindung liegt die Aufgabe zugrunde, eine wärmebeständige Dichtung für Öfen oder ähnliche Gegenstände zu schaffen, die gut und dauerhaft an einer Unterlage wie dem Gehäuse des Ofens anzubringen ist und die auch unter extremen Temperaturschwankungen eine lange Lebensdauer hat sowie stets eine befriedigende und ausreichende Dichtwirkung gewährleistet.

Diese Aufgabe wird erfindungsgemäß mit einer Dichtung der eingangs genannten Gattung gelöst, welche die Merkmale des Anspruches 1 aufweist. Vorteilhafte Ausgestaltungen der erfindungsgemäßen Dichtung und Vorrichtung sind Gegenstand der Unteransprüche.

Durch die Erfindung wird eine wärmebeständige Dichtung geschaffen, die beispielsweise für Öfen bestimmt ist und auch hohen Temperaturschwankungen ausgesetzt werden kann. Diese Dichtung kann einerseits dauerhaft und sicher an einer Unterlage angebracht werden und zeigt andererseits sowohl gegenüber der Unterlage als auch gegenüber einer Tür oder einem sonstigen Verschluß auch noch nach langer Betriebszeit eine befriedigende Dichtwirkung. Die als Klammern ausgebildeten Halter der Dichtvorrichtung sind mit dem Dichtungsmaterial-Strang so verbunden, daß dessen dichtende Oberfläche im Bereich der Anbringung der Klammern nicht beeinträchtigt wird und insbesondere nicht seine Dichtfähigkeit verliert. Andererseits sind die als Halter dienenden Klammern an der Unterlage sowie auch an dem strangförmigen Dichtungsmaterial so angebracht, daß sie zwar leicht zu montieren, ohne Zerstörung aber nicht mehr abzubauen oder sonstwie zu entfernen sind. Daher läßt sich die erfindungsgemäße Dichtung zwar problemlos am gewünschten Einsatzort montieren oder anbringen, kann aber durch unsachgemäße Behandlung oder auch bei üblichen Reinigungsarbeiten nicht aus der Montageposition entfernt werden.

In der Zeichnung sind zwei Ausführungsbeispiele einer erfindungsgemäßen wärmebeständigen Dichtung schematisch dargestellt, und zwar zeigt
- Fig. 1: eine etwa rechteckig ausgebildete endlose Dichtung von der Einbauseite aus betrachtet in gegenüber natürlicher Größe verkleinerter Darstellung,
- Fig. 2: eine Seitenansicht einer als Halter für die erfindungsgemäße Dichtung dienenden Klammer, in vergrößerter Darstellung,
- Fig. 3: eine Stirnansicht der Klammer aus Fig. 2 in Verbindung mit einem erfindungsgemäßen Dichtungsmaterial-Strang und
- Fig. 4: eine Seitenansicht einer gegenüber Fig. 2 abgewandelten Klammer der erfindungsgemäßen Dichtung.

Die in der Zeichnung dargestellte Dichtung (1) weist einen Strang (2) aus Dichtungsmaterial sowie als Halter dienende Klammern (3 bzw. 4), die aus Federstahl bestehen, auf.

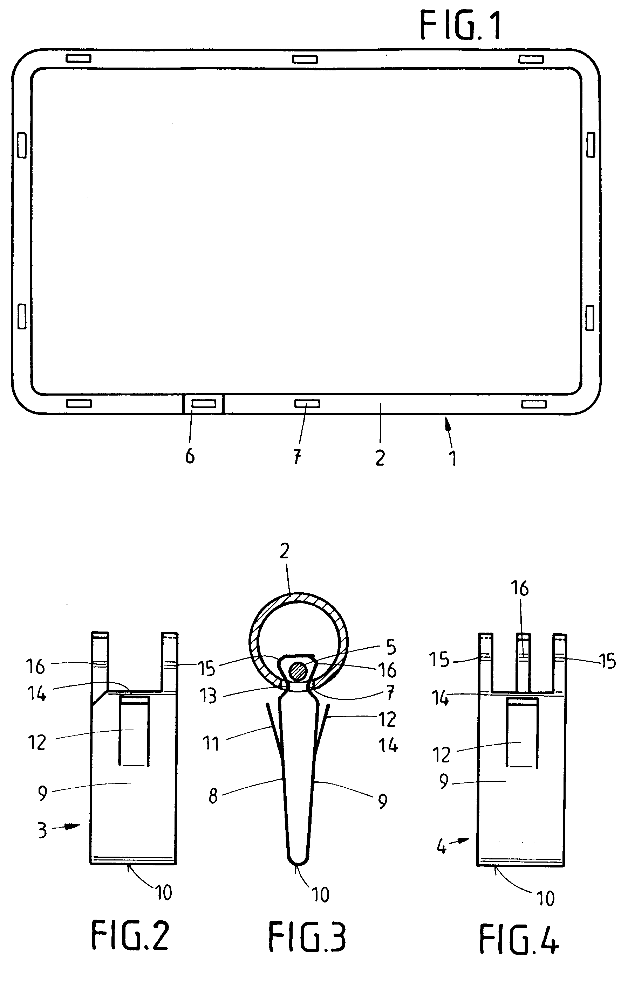

Der Strang (2) ist beim dargestellten Ausführungsbeispiel als schlauchförmiger Hohlkörper ausgebildet, in welchem sich eine drahtförmige Einlage (5) befindet. Der Dichtungsmaterial-Strang (2) sowie die drahtförmige Einlage (5) sind mittels einer Hülse (6) zu einem endlosen Gebilde verbunden, wie Fig. 1 zeigt.

Der schlauchförmige Strang (2) besteht aus wärmebeständigem Glasseidenmaterial, während die Einlage (5) ein Metalldraht sein kann, zumindest aber aus wärmebeständigem Material bestehen sollte.

Die im schlauchförmigen Strang (2) angeordnete drahtförmige Einlage (5) dient zum Anbringen der als Halter dienenden Klammern (3 bzw. 4) am aus Dichtungsmaterial bestehenden Strang (2). Zu diesem Zweck werden die Klammern (3 bzw. 4), vorzugsweise mittels eines nicht dargestellten Werkzeuges, durch den Strang (2) gesteckt und dabei in nachstehend erläuterter Weise an der drahtförmigen Einlage (5) dauerhaft befestigt. Danach kann man die Klammern (3 bzw. 4) mit ihrem Rastende in entsprechende Öffnungen einer Unterlage, beispielsweise eines Ofengehäuses, stecken, wodurch sie dauerhaft und unverlierbar verankert werden, so daß die Klammern und damit die gesamte Dichtung nicht ohne Zerstörung von der Unterlage gelöst werden können.

Die Klammern (3 bzw. 4) bestehen aus einem gebogenen und damit in die gewünschte Form gebrachten Zuschnitt aus Federstahl. Dieser Zuschnitt hat in seiner gebogenen Form zwei keilförmig zueinander verlaufende Wände (8 und 9), die am unteren oder äußeren Ende der betreffenden Klammer (3 bzw. 4) über eine Abrundung (10) einstückig miteinander verbunden sind. Diese Abrundung (10) bildet eine abgestumpfte keilförmige Spitze, mit deren Hilfe die betreffende Klammer (3 bzw. 4) in eine entsprechende Öffnung in der Unterlage, auf der die Dichtung (1) befestigt werden soll, eingesteckt werden kann.

Aus jeder Wand (8 und 9) ist jeweils eine ausgestanzte Zunge (11 bzw. 12) herausgebogen. Die beiden Zungen (11 und 12) bilden Widerhaken, die nach dem Einstecken der Klammer (3 bzw. 4) in eine hier nicht dargestellte entsprechende Öffnung der Unterlage ein Zurückziehen der Klammer aus dieser Öffnung verhindern.

Am oberen Ende ist jede Wand (8 bzw. 9) mit einer nach einwärts gehenden Einkröpfung (13 bzw. 14) versehen. Die einander gegenüberliegenden und komplementär zueinander ausgebildeten Einkröpfungen (13 und 14) bilden zusammen eine Rast, welche, wenn die betreffende Klammer (3 bzw. 4) tief genug in die entsprechende Öffnung der Unterlage eingesteckt wurde, die Klammer in der Einstecklage fixiert. Die widerhakenartig angeordneten Zungen (11 und 12) dienen daher lediglich als Rückziehsperre, nicht jedoch als Fixierelemente zum Halten der Klammern in der gewünschten Montageposition.

Bei der in Fig. 2 dargestellten Ausführungsform hat jede Wand (8 bzw. 9) der Klammer (3) am oberen Ende und im Anschluß an die entsprechende Einkröpfung (13 bzw. 14) einen zur Innenseite der Klammer weisenden gewölbten Haken (15 bzw. 16). Die einander gegenüberliegenden Haken (15 und 16) werden beim Einstecken durch Öffnungen (7) bildende auf die drahtförmige Einlage (5) aufgeschoben und an dieser verankert. Ein Zurückziehen der Klammer von der drahtförmigen Einlage ist daher praktisch nicht möglich.

Die in Fig. 4 gezeigte Klammer (4) unterscheidet sich von der Klammer (3) gemäß Fig. 2 lediglich dadurch, daß die Wand (9) am oberen Ende zwei Haken (15) aufweist, zwischen denen versetzt ein Haken (16) der Wand (8) angeordnet ist. Im übrigen ist die Funktion der Klammer (4) und deren Montage ebenso wie in Verbindung mit der Klammer (3) beschrieben.

Auch bei der Klammer (3) sind die Haken (15 und 16) versetzt zueinander angeordnet, was die Montierbarkeit der betreffenden Klammer (3 bzw. 4) erleichtert.

## Patentansprüche

1. Wärmebeständige Dichtung für Öfen od. dgl., mit einem flexiblen Strang aus Dichtungsmaterial und mit Haltern zum Befestigen des Dichtungsmaterials an einer Unterlage, beispielsweise am Gehäuse eines Ofens, **dadurch gekennzeichnet**, daß der Strang (2) aus schlechtleitendem Dichtungsmaterial besteht und die Halter (3;4) in den Strang aus Dichtungsmaterial eingreifend ausgebildet sind.

2. Vorrichtung nach Anspruch 1, dadurch gekennzeichnet, daß der Strang (2) aus Dichtungsmaterial ein Schlauch ist, in dem wenigstens ein als Verankerung für die Halter (3;3) dienendes Verankerungselement (5) untergebracht ist.

3. Vorrichtung nach Anspruch 1 oder 2, dadurch gekennzeichnet, daß der schlauchförmige Strang (2) aus Glasseide besteht.

4. Vorrichtung nach einem der Ansprüche 1 bis 3, dadurch gekennzeichnet, daß das Verankerungselement (5) ein endlos ausgebildeter Draht ist.

5. Vorrichtung nach einem der Ansprüche 1 bis 4, dadurch gekennzeichnet, daß jeder Halter (3;4) klammerförmig mit einem Rastende (8 bis 14) und einem Klammerende (15;16) ausgebildet ist.

6. Vorrichtung nach Anspruch 5, dadurch gekennzeichnet, daß jeder Halter (3;4) aus einem Zuschnitt aus federndem Material wie Metallblech besteht.

7. Vorrichtung nach Anspruch 5 oder 6, dadurch gekennzeichnet, daß das Rastende (8 bis 14) jedes Halters (3;4) V-förmig ausgebildet ist und eine Rast (13,14) sowie eine Rückziehsperre (11,12) aufweist.

8. Vorrichtung nach einem der Ansprüche 5 bis 7, dadurch gekennzeichnet, daß das Hakenende (15,16) jedes Halters (3;4) gegeneinander versetzte, spiegelbildlich zueinander ausgebildete, zum Verankerungselement (5) des Dichtungsmaterial-Stranges (2) offene Haken (15,16) aufweist.
